# EUROPEAN PATENT APPLICATION

(11) **EP 3 220 332 A1**
(43) Date of publication of application: **20.09.2017**
(21) Application number: 17160790.6
(22) Date of filing: 14.03.2017
(51) Int. Cl.: G06Q 20/32, G06Q 20/36

(54) **METHOD OF PROCESSING CARD OPERATING INFORMATION AND ELECTRONIC DEVICE SUPPORTING THE SAME**

(30) Priority: 14.03.2016 KR 20160030147 P
(71) Applicant: Samsung Electronics Co., Ltd., Gyeonggi-do 16677 (KR)
(72) Inventor: JIN, Hee Gyu, 16571 Gyeonggi-do (KR); KIM, Jang Hyuk, 16928 Gyeonggi-do (KR); BAE, Gun Woo, 41578 Daegu (KR); LEE, Ji Hye, 08786 Seoul (KR)
(74) Representative: HGF Limited

(57) **Abstract**

An electronic device and method for processing card operating information is provided. The electronic device includes a first memory which stores account information and card operating information, a second memory which stores payment required information, and a processor which receives the account information, transmits the account information to a first external device, and receives a response from the first external device. When the response indicates that the account information corresponds to the payment required information stored in the second memory, the processor receives, from the first external device, the card operating information corresponding to the payment required information and stores the received card operating information in the first memory. When the response indicates that the account information does not correspond to the payment required information stored in the second memory, the processor receives a request, from a second external device, to delete the payment required information from the second memory.

## Description

### BACKGROUND OF THE INVENTION

### 1. Field of the Invention

The present disclosure relates generally to an information processing technology associated with a mobile payment service.

### 2. Background of the Invention

In recent years, a payment service performed from or via a mobile device has been provided. In this regard, an electronic device performs various information processes associated with the payment service.

Among various information processes associated with a conventional payment service, a separate 'restore' function with respect to deleted information does not exist. Accordingly, when a user of a conventional electronic device resets the electronic device or a payment application, the user experiences an inconvenience of re-registering all the information related to the payment.

### SUMMARY OF THE INVENTION

Aspects of the present disclosure are to address at least the above-mentioned problems and/or disadvantages and to provide at least the advantages described below.

Accordingly, an aspect of the present disclosure is to provide a method of processing card operating information, which is capable of restoring the card operating information, and an electronic device supporting the same.

In accordance with an aspect of the present disclosure, an electronic device is provided. The electronic device includes a communication interface, a first memory configured to store account information and card operating information associated with a payment function of a user of the electronic device, a second memory configured to store payment required information, and a processor configured to receive the account information, transmit the account information to a first external electronic device, through the communication interface, receive a response from the first external electronic device, based on the transmission, when the response indicates that the account information corresponds to the payment required information stored in the second memory, receive, from the first external electronic device, the card operating information corresponding to the payment required information, and store the received card operating information in the first memory, and when the response indicates that the account information does not correspond to the payment required information stored in the second memory, receive a request, from a second external electronic device, to delete the payment required information from the second memory.

In accordance with another aspect of the present disclosure, an electronic device is provided. The electronic device includes a memory configured to store card operating information, account information and identification information corresponding to a first external electronic device and a processor configured to receive the account information and the identification information from the first external electronic device, receive information regarding whether payment required information corresponding to the identification information is stored in the first external electronic device, determine whether stored account information corresponding to the payment required information is in agreement with the received account information based on at least the received information, when the stored account information corresponding to the payment required information is in agreement with the received account information, transmit, to the first external electronic device, card operating information corresponding to the payment required information, and when the stored account information corresponding to the payment required information is not in agreement with the received account information, transmit, to a second external electronic device, a request to delete the payment required information from the first external electronic device.

In accordance with another aspect of the present disclosure, an electronic device is provided. The electronic device includes a processor and a memory that stores at least one instruction, which when executed by the processor transmits, to a server, a message requesting a restoration of card operating information, when a payment function is executed in the electronic device and the card operating information has been deleted from the electronic device, receives the card operating information from the server, and stores the received card operating information in the memory.

In accordance with an aspect of the present disclosure, a method of processing card operating information is provided. The method includes receiving an event associated with an execution of a payment function in an electronic device from which the card operating information is deleted, transmitting a message, to a server, requesting a restoration of the card operating information, receiving the card operating information from the server, and storing the received card operating information in a memory.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of a payment processing environment, according to an embodiment of the present disclosure;
FIG. 2 is a block diagram of an electronic device, according to an embodiment of the present disclosure;
FIG. 3 is a flowchart of a method of processing card operating information in an electronic device, according to an embodiment of the present disclosure;
FIG. 4 is a flowchart of a method of processing card operating information in a payment service server, according to an embodiment of the present disclosure;
FIG. 5 is a signal flow diagram of a method of processing card operating information, according to an embodiment of the present disclosure;
FIG. 6 is a signal flow diagram of a method of registering a card, according to an embodiment of the present disclosure;
FIG. 7 illustrates a screen interface associated with a function of restoring card operating information in an electronic device, according to an embodiment of the present disclosure;
FIG. 8 is a block diagram of a configuration of an electronic device in a network environment, according to an embodiment of the present disclosure;
FIG. 9 is a block diagram of a configuration of an electronic device, according to an embodiment of the present disclosure; and
FIG. 10 is a block diagram of a configuration of a program module of an electronic device, according to an embodiment of the present disclosure.

### DETAILED DESCRIPTION OF EMBODIMENTS OF THE PRESENT INVENTION

Various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

Various embodiments of the present disclosure are described with reference to accompanying drawings, in which similar reference numerals are used to refer to similar elements. However, this description is not intended to limit the present disclosure to the described embodiments. Accordingly, those of ordinary skill in the art will recognize that modifications, equivalents, and/or alternatives on the various embodiments described herein can be variously made without departing from the scope and spirit of the present disclosure.

The expressions "have", "include" and "comprise", used herein indicate the existence of corresponding features (e.g., elements such as numeric values, functions, operations, or components) but do not exclude the presence of additional features.

The expressions "A or B", "at least one of A or/and B", and "one or more of A or/and B" used herein may include any and all combinations of one or more of the associated listed items. For example, the term "A or B", "at least one of A and B", or "at least one of A or B" may refer to all of the case (1) where A is included, the case (2) where B is included, or the case (3) where both A and B are included.

Terms, such as "first", "second", etc. used herein may refer to various elements of various embodiments, but do not limit the elements. Furthermore, such terms may be used to distinguish one element from another element. For example, "a first user device" and "a second user device" may indicate different user devices regardless of the order or priority thereof. For example, "a first user device" and "a second user device" indicate different user devices, regardless of the order or importance. Additionally, a first component may be referred to as a second component and vice versa, without departing from the scope of the present disclosure.

When an element (e.g., a first element) is referred to as being "coupled" or "connected" with/to another element (e.g., a second element), it may be directly coupled or connected with/to the other element or an intervening element (e.g., a third element) may be present. In contrast, when the first element is referred to as being "directly coupled" or "directly connected" with/to the second element, it should be understood that there is no intervening element.

The expression "configured to" used herein may be used interchangeably with the expression "suitable for", "having the capacity to", "designed to", "adapted to", "made to", or "capable of'. The term "configured to" may not mean only "specifically designed to" in hardware. Instead, the expression "a device configured to" may mean that the device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

Terms used in the present disclosure are used to describe specified embodiments and are not intended to limit the scope of the present disclosure. The terms of a singular form may include plural forms as well unless otherwise specified. Unless otherwise defined herein, all terms used herein, including technical or scientific terms, may have the same meanings as those commonly understood by a person skilled in the art to which the present disclosure pertains. Terms, which are defined in a generally used dictionary should be interpreted as is customary in the relevant related art and not in an idealized or overly formal manner unless expressly so defined herein. In some cases, even when terms are defined in the specification, they may not be interpreted to exclude embodiments of the present disclosure.

An electronic device according to an embodiment of the present disclosure may include at least one of smartphones, tablet personal computers (PCs), mobile phones, video telephones, e-book readers, desktop PCs, laptop PCs, netbook computers, workstations, servers, personal digital assistants (PDAs), portable multimedia players (PMPs), motion picture experts group (MPEG-1 or MPEG-2) Audio Layer 3 (MP3) players, mobile medical devices, cameras, wearable devices (e.g., head-mounted-devices (HMDs), such as electronic glasses), electronic apparel, electronic bracelets, electronic necklaces, electronic appcessories, electronic tattoos, smart watches, etc..

An electronic device may also be a home appliance, such as a television (TV), a digital versatile disc (DVD) player, an audio device, a refrigerator, an air conditioner, a cleaner, an oven, a microwave oven, a washing machine, an air cleaner, a set-top box, a home automation control panel, a security control panel, a TV box (e.g., Samsung HomeSyncTM, Apple TVTM, or Google TVTM), a game console (e.g., XboxTM or PlayStationTM), an electronic dictionary, an electronic key, a camcorder, an electronic picture frame, etc.

An electronic device may include at least one of medical devices (e.g., various portable medical measurement devices (e.g., blood glucose monitoring devices, heartbeat measuring devices, blood pressure measuring devices, body temperature measuring devices, and the like), magnetic resonance angiography (MRA) devices, magnetic resonance imaging (MRI) devices, computed tomography (CT) devices, scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller machines (ATMs), points of sales (POSs) machines, or Internet of things (IoT) devices (e.g., light bulbs, various sensors, electric or gas meters, sprinkler devices, fire alarms, thermostats, street lamps, toasters, exercise equipment, hot water tanks, heaters, boilers, etc.).

An electronic devices may include at least one of parts of furniture or buildings/structures, electronic boards, electronic signature receiving devices, projectors, or various measuring instruments (e.g., water meters, electricity meters, gas meters, or wave meters, etc.).

An electronic device may be a flexible device.

An electronic device may be a combination of any of the above-described or other devices.

Furthermore, an electronic device according to an embodiment is not limited to the above-described electronic devices and may include other electronic devices and new electronic devices according to the development of technologies.

Herein, the term "user" may refer to a person who uses an electronic device or may refer to a device (e.g., an artificial intelligence electronic device) that uses an electronic device.

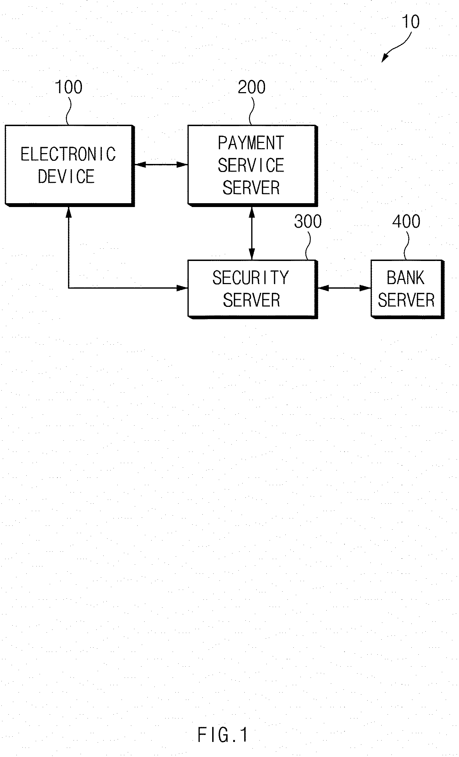

FIG. 1 is a block diagram of a payment processing environment, according to an embodiment of the present disclosure.

Referring to FIG. 1, a payment processing environment 10 is provided. The payment processing environment 10 includes an electronic device 100, a payment service server 200, and a security server 300 (e.g., a trusted service manager, (TSM)), and a bank server 400.

The payment processing environment 10 supports a card registration of the electronic device 100. For instance, the payment processing environment 10 provides registering device identification information, user account information, and registered card information of the electronic device 100 in at least one of the bank server 400, the security server 300, and the payment service server 200. The registered card information is used by a user to process payments using the electronic device 100.

The electronic device 100 may stores and manages card operating information, e.g., a card image, a card name, card product information, a card content, etc. The card operating information includes, for example, information stored in the electronic device 100 in association with a payment function. The card operating information is mapped with payment required information stored in a security module. The security module includes a storage space with a relatively higher security level than that of a memory and may be a circuit that ensures safe data storage and a protected execution environment. The security module may be implemented by a separate circuit and may include a separate processor. The security module may include an embedded secure element (eSE) (including an embedded secure processor and an embedded secure memory) existing in a detachable/attachable smart chip or on a secure digital (SD) card, or built in a fixed chip of the electronic device 100. In addition, the security module may be operated in a different operating system (OS) from an OS of the electronic device 100. For instance, the security module may be operated based on a java card open platform (JCOP).

The card operating information is also stored and managed in the payment service server 200. That is, the card operating information is stored in each of the payment service server 200 and the electronic device 100 when the electronic device 100 performs the card registration through the payment service server 200 and the card registration completes normally. The electronic device 100 stores the payment required information associated with the card operating information in the security module. The payment required information includes information, e.g., a key value used for the payment, a token, etc., which is secure.

The card operating information may be deleted from the electronic device 100 by an application delete request, and application-related data (including the card operating information) may be deleted by an application reset request.

The security module of the electronic device 100 may include an independent OS and a memory area or a distinct OS and a memory area. Accordingly, the payment required information stored in the security module may be maintained without being deleted while a factory reset processing operation of the electronic device 100 is performed. When a user account is logged in after the factory reset, the electronic device 100 provides a restore function of the card operating information based on user account login information. For instance, when an account of the same user as a previous user is logged in, the electronic device 100 obtains information about whether a restoration of the card operating information is requested. When a restore request is received, the electronic device 100 receives the card operating information stored in the payment service server 200 and restores the card operating information in response to the restore request.

Further, when a deletion of the card operating information is requested and the account of the logged-in user is different from the account of the previous user, the electronic device 100 deletes the payment required information stored in the security module. In addition, the electronic device 100 notifies the payment service server 200 of the deletion of the payment required information.

When the electronic device 100 logs in the payment service server 200, the electronic device 100 provides information to the payment service server 200 indicating whether the login occurs after the factory reset. Accordingly, the payment service server 200 compares the login account after the factory reset with an account stored in the payment service server 200 based on the information provided from the electronic device 100 and determine whether to delete the payment required information. If the login account is the same as the account stored in the payment service server 200, the payment service server 200 sends a message including the card operating information and the electronic device 100performs the restoration of the card operating information in response to a user's selection. However, if the login account is different from the account stored in the payment service server 200, the electronic device 100 deletes the payment required information and the payment service server 200 deletes the card operating information and provides the electronic device 100 with notification information on the deletion of the card operating information.

The payment service server 200 supports the card registration and operation of the electronic device 100. For instance, the payment service server 200 sends a request for a card registration to the security server 300 in response to a request for a card registration from the electronic device 100. The payment service server 200 sends a request for a specific command set(or commands, or instructions), which is requested by the security server 300, to the electronic device 100. When the electronic device 100 registers a card, the payment service server 200 generates card operating information associated with the card and provides the electronic device 100 with the generated card operating information. The payment service server 200 stores and manages the generated card operating information. The payment service server 200 provides the card operating information to the electronic device 100 in response to a request to restore the card operating information to support the restoration of the card operating information. If the account login information of the user logged into the electronic device 100 after a factory-reset is different from the login information of the previous user, the payment service server 200 deletes the stored card operating information. The payment service server 200 processes a transmission of information based on the payment application operation of the electronic device 100. The payment service server 200 includes, for example, a SamsungTM payment service server.

The security server 300 generates and records the payment required information stored in the security module of the electronic device 100. For instance, the security server 300 transmits data related to a connection of the security server 300 to the electronic device 100 through the payment service server 200 in response to a request of the card registration of the electronic device 100 from the payment service server 200. When the electronic device 100 is connected to the security server 300 (e.g., a connection through a security channel), the security server 300 communicates with a security processor of the electronic device 100 to write the payment required information in the security module. In this operation, when the card registration is requested, the security server 300 notifies the bank server 400 of the card registration request and receives information required for the card registration from the bank server 400. The security server 300 communicates with the security processor of the electronic device 100 to delete the payment required information written in the security module in response to the request to delete the payment required information of the electronic device 100.

The bank server 400 communicates with the security server 300 and provides information required for the card registration. In this regard, the bank server 400 may issue a card, which is to be operated, through online or offline based on the account information of the user who uses the electronic device 100. The bank server 400 transmits the card registration information (e.g., actual card information, a portion of the payment required information issued by the electronic device, etc.) to the electronic device 100 through the security server 300 and the payment service server 200 in response to a request of the card registration from the electronic device 100 to operate the issued card in a specific electronic device. When the bank server 400 is requested to delete the registered card (e.g., deletion by a factory reset, deletion of the payment required information stored in the security module, etc.) by the electronic device 100, the bank server 400 may delete the card issued to the user of the electronic device 100 based on the user account information.

In the above description, the bank server 400 and the security server 300 may be configured as separate servers, but they should not be limited thereto or thereby. For instance, the bank server 400 and the security server 300 may be integrated into and operated as a single server.

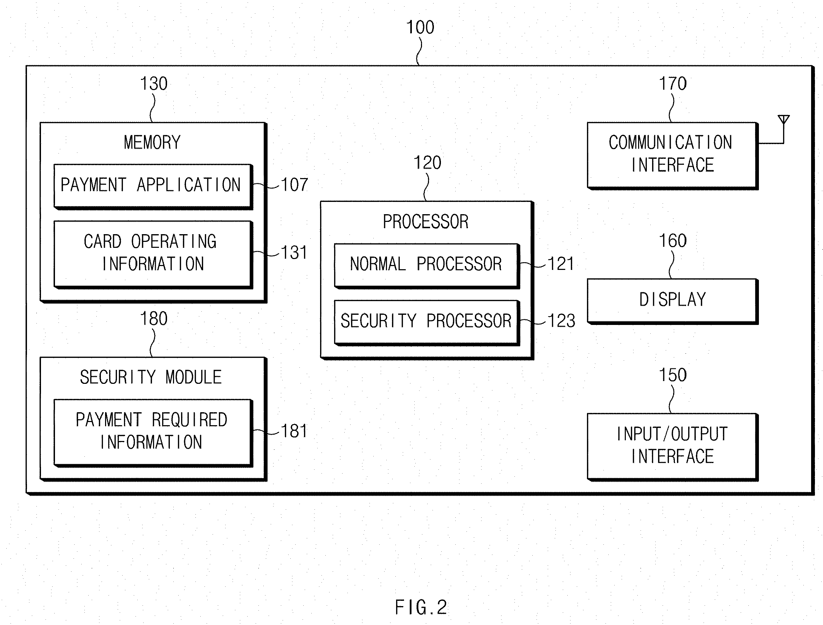

FIG. 2 is a block diagram of an electronic device, according to an embodiment of the present disclosure.

Referring to FIG. 2, the electronic device 100 is provided. The electronic device 100 includes a processor 120, a memory 130, an input/output interface 150, a display 160, a communication interface 170, and a security module 180.

The processor 120 processes various signals, transmits the signals, and stores data, which are associated with the operation of the electronic device 100. For instance, the processor 120 processes signals associated with the card registration operated by the electronic device 100. When the card registration is completed, the processor 120 stores the card operating information generated based on metadata associated with the registered card in the memory 130 and manages the stored card operating information. In addition, the processor 120 stores payment required information 181 mapped in card operating information 131 and required to be secured (e.g., encryption) in the security module 180 and manages the stored payment required information 181.

The processor 120 processes the factory reset or a payment application reset. When the factory reset is requested, the processor 120 deletes data associated with other applications installed and data associated with the payment application. When the payment application reset is requested, the processor 120 deletes the data associated with the payment application. For instance, when the payment application reset is requested, the processor 120 deletes the card operating information 131 associated with the card operation and stored in the memory 130. The processor 120 supports the restoration of the card operating information 131 deleted in response to the payment application reset request. To this end, the processor 120 includes a normal processor 121 and a security processor 123.

The normal processor 121 supports a normal processor function of the electronic device 100. For instance, the normal processor 121 connects to the payment service server 200 and processes a function of receiving and outputting data provided from the payment service server 200. When an operation related to a payment process is requested, the normal processor 121 outputs at least a portion of a text or an image corresponding to the card operating information 131 stored in the memory 130 to the display 160. When a payment request occurs, the normal processor 121 requests the payment process from the security processor 123.

When the factory reset request or the payment application reset request occurs, the normal processor 121 deletes the card operating information 131 stored in the memory 130. In addition, the normal processor 121 connects to the payment service server 200, receives the data associated with the restoration of the card operating information 131 provided from the payment service server 200, and restores the received card operating information 131 in the memory 130. In this operation, the normal processor 121 outputs a screen associated with the restoration of the card operating information 131 to the display 160.

The security processor 123 processes data requiring security processing while the normal processor 121 is in operation. The security processor 123 establishes a security communication channel with the security server 300 and writes the payment required information 181 in a predetermined area of the security module 180, e.g., an eSE, in response to a control of the security server 300. For instance, the security processor 123 stores payment required information respectively corresponding to a plurality of cards in the security module 180 and manages the stored payment required information. When a request to delete the card operating information 131 and the payment required information 181 mapped in the card operating information 131 is received, from the normal processor 121, the security processor 123 supports the deletion of the payment required information 181 stored in the security module 180. In this operation, the security processor 123 establishes the security communication channel with the security server 300 and deletes the payment required information 181 stored in the security module 180 in response to the control of the security server 300. The security processor 123 may include, for example, a processor associated with an execution of a TSM library (TSMLib). The TSMLib establishes a security channel associated with the operation of the security module 180 and reads or writes the data in the security module 180 based on the security channel.

The memory 130 stores at least one program associated with the operation of the electronic device 100. For instance, the memory 130 stores an OS. In addition, the memory 130 stores a payment application 107. Further, the memory 130 stores the card operating information 131 associated with the operation of the payment application 107. The card operating information 131 is information provided from the payment service server 200. The same card operating information as the card operating information 131 is also stored and managed in the payment service server 200. The card operating information 131 stored in the memory 130 of the electronic device 100 may be deleted in accordance with the request of the factory reset or the payment application 107 reset. The memory 130 stores the deleted card operating information 131 again in accordance with the request for the restoration of the card operating information 131. The card operating information 131 may be referenced when the payment application 107 is executed.

The card operating information 131 includes, for example, the metadata associated with the card registered in the payment service server 200, the security server 300, and the bank server 400. For instance, the card operating information 131 includes the card image, the card name, the card content, card verification code (CVC) information, card expiration date information, and the like. After the payment application 107 is executed, the card operating information 131 may be referenced, and a specific card image may be displayed through the display 160.

The input/output interface 150 processes an input function and an output function of the electronic device 100. For instance, the input/output interface 150 includes an input unit (e.g., a button, a keypad, a touch pad, a display having a touch function, etc.) which generates a user input signal associated with the card registration and a user input signal associated with the execution of the payment application 107. In addition, the input/output interface 150 includes an input unit which generates a user input signal associated with the factory reset or the payment application reset and an input signal requesting the restoration of the deleted card operating information 131.

The input/output interface 150 may include an audio unit. The audio unit outputs audio information associated with the card registration and the restoration of the card operating information 131. The audio unit may include at least one microphone. An audio signal collected by the microphone may be converted to speech to text (STT) and used as a command associated with a specific user function, e.g., a card registration function, a card operating information restoring function, etc.

The communication interface 170 supports a communication function of the electronic device 100. For instance, the communication interface 170 establishes a communication channel with the payment service server 200. The communication interface 170 receives the data associated with the card registration process and the card operating information 131 from the payment service server 200. The communication interface 170 also establishes a security communication channel with the security server 300 and receives the payment required information 181 from the security server 300. In this regard, the communication interface 170 establishes the security communication channel with the security server 300 in response to the control of the security processor 123.

The security module 180 is a module that stores the data requiring security while the electronic device 100 is in operation. The security module 180 may include the eSE. The eSE may include a security storage area and a security OS designed to control the reading-out and writing-in of the data from and in the security storage area. The security module 180 stores the payment required information 181. In this regard, the security module 180 establishes the security communication channel with the security server 300, via the communication interface 170, and stores the data, e.g., the payment required information 181 provided from the security server 300 in response to the control of the security server 300. The payment required information 181 is encrypted information. For instance, the payment required information 181 includes the encrypted information used while processing the payment based on the card operating information 131. The payment required information 181 may be deleted by the control of the security server 300.

The electronic device 100 includes a magnetic secure transmission (MST) and a security area (e.g., trusted execution environment (TEE)) operating the MST.

According to an embodiment of the present invention, an electronic device is provided. An electronic device may include a communication interface, a first memory configured to store one or more account information corresponding to a user of the electronic device, a second memory configured to store at least one payment required information and a processor configured to receive the account information associated with a payment function, transmit the account information to an external electronic device through the communication interface, receive a response from the external electronic device based on the transmission, receive card operating information corresponding to the at least one payment required information from the external electronic device in a case that the response indicates that the account information correspond to the at least one payment required information stored in the second memory, store the payment required information in the first memory, and receive a request to delete the at least one payment required information from another external electronic device in a case that the response indicates that the account information do not correspond to the at least one payment required information stored in the second memory.

According to an embodiment of the present invention, an electronic device may include a memory configured to store one or more account information corresponding to a user of one or more external electronic devices and one or more identification information corresponding to the one or more external electronic devices and a processor configured to receive the account information and the identification information from the external electronic device, obtain information whether payment required information corresponding to the identification information are stored in a security module operatively connected to the external electronic device, determine whether account information corresponding to the payment required information are in agreement with the account information based on at least the verified result, transmit card operating information corresponding to the payment required information to the external electronic device in a case that the account information corresponding to the payment required information are in agreement with the account information, and transmit a request to delete the payment required information from the security module to another external electronic device in a case that the account information corresponding to the payment required information are not in agreement with the account information.

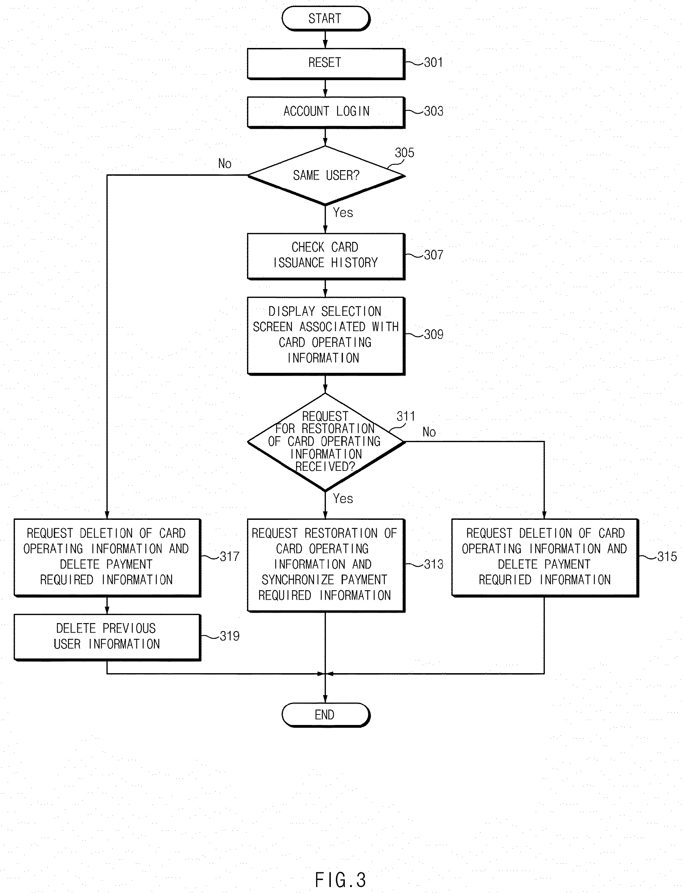

According to an embodiment of the present invention, an electronic device may include a communication interface, a processor configured to be operatively connected to the communication interface and a memory configured to be operatively connected to the processor and store at least one instruction executed by the processor, wherein the instruction, when executed by the processor, is configured to transmit a message requesting a restoration of card operating information to a server when a payment function is executed in the electronic device from which the card operating information are deleted in accordance with a reset operation associated with the payment function, and store the received card operating information in the memory when the card operating information are received from the server. FIG. 3 is a flowchart of a method of processing card operating information in an electronic device, according to an embodiment of the present disclosure.

Referring to FIG. 3, a method of processing card operating information 131 in the electronic device 100 is provided.

At step 301, the normal processor 121 of the electronic device 100 performs the reset operation (e.g., at least one of the factory reset or the payment application reset). For instance, the normal processor 121 performs the payment application reset operation associated with the deletion of the card operating information 131. When the payment application reset operation is performed, the normal processor 121 deletes the payment-related data including the card operating information 131. The normal processor 121 performs the factory reset operation. In this case, the normal processor 121 performs an initialization operation to delete all information in the electronic device 100, with the exception of factory installed applications and information. In this case, the normal processor 121 deletes the card operating information 131 from the memory 130. The normal processor 121 stores a history of performing the factory reset of the electronic device 100 in an area that is not removed during the reset operation.

At step 303, the normal processor 121 performs an account login function to log into the payment service server 200. For instance, when an execution of at least one user function (or application) requiring the account login is requested, the normal processor 121 outputs an account login screen and collects the account information. The collection of the account information collected through the account login is carried out by the security processor 123. Alternatively, the security processor 123 may carry out the output of the account login, the collection of the account information, and the transmission of the account information..

At step 305, when the account login information is collected, the security processor 123 determines whether the user who is currently logged in is the same as the user who previously logged in. For instance, the security processor 123 stores the previous account login information in the security module 180 which is not removed during the reset operation. Then, when the account login information is collected, the security processor 123 compares the collected login information with the stored login information to determine whether the login information currently input is in agreement with the previous account login information. The security processor 123 transmits the collected account information to the payment service server 200, and the user of the account information may be verified by the payment service server 200. During the transmission of the account information to the payment service server 200, the security processor 123 transmits, to the payment service server 200, identification information of the electronic device 100, the collected account login information, and the factory reset history. The payment service server 200 also obtains, from the security processor 123 the information regarding whether the current login user is determined to be the same as the previous login user, verifies the current login user, and provides the verification result to the electronic device 100. When the account information is received, by the payment service server 200, after the factory reset of the electronic device 100, the payment service server 200 uses the account information to delete the payment required information 181 and to restore the card operating information 131 based on the factory reset history.

At step 307, when the current login user is the same as the previous login user, the security processor 123 obtains card issuance history verification information. That is, the security processor 123 transmits a verify request message to the payment service server 200 so as to verify the card issuance history. The payment service server 200 transmits card issuance history verification information to the security processor 123 in response to the request from the security processor 123.

At step 309, when the card issuance history verification information is received from the payment service server 200, the normal processor 121 may display a selection screen associated with the card operating information 131 through the display 160. The selection screen associated with the card operating information 131 may include a user interface to select the deletion or restoration of the card operating information 131 about at least one issued card. In addition, the selection screen associated with the card operating information 131 may include a user interface to select whether to restore all of the previously-deleted card operating information 131.

At step 311, the normal processor 121 may receive a user input for requesting restoration of the card operating information 131 or for requesting deletion of the card operating information 131.

For instance, at step 311, the normal processor 121 may receive an input signal related to a restoration request, through the input/output interface 150 (e.g., through a button, keypad, or touch function).

When the user input for requesting the restoration of the card operating information 131 is received, then at step 313, the processor 120 requests the card operating information from the payment service server 200, restore the card operating information 131, and synchronize the payment required information 181. To this end, the normal processor 121 transmits, to the payment service server 200, a message requesting the restoration of the card operating information 131. When the current login user is the same as the previous login user, the card operating information 131 corresponding to the card issuance history exists, and when the restoration of the card operating information 131 is requested, the payment service server 200 transmits corresponding card operating information 131 to the electronic device 100. The card operating information 131 includes substantially the same information as the card operating information deleted when the factory reset or the payment application reset was performed in the electronic device 100. When a message that requests partial information of the card operating information 131 to be restored is received, the payment service server 200 transmits only the partial information of the card operating information 131 to the electronic device 100.

When the card operating information 131 is received from the payment service server 200, the normal processor 121 restores the card operating information 131 in the memory 130 and the security processor 123 synchronizes the payment required information 181 in the security module 180. Accordingly, when the card operating information 131 is received, the normal processor 121 stores the card operating information 131 in a designated area of the memory 130 and the security processor 123 synchronizes the payment required information 181 stored in the security module 180 with the card operating information 131 in the memory 130. When the synchronization is normally completed, the normal processor 121 operates with the card operating information 131 in response to the execution of the payment application 107.

Alternatively, the normal processor 121 buffers the card operating information 131 provided from the payment service server 200 and synchronizes the card operating information 131 with the payment required information 181 stored in the security module 180 while the card operating information 131 is buffered. If an error occurs in the synchronization between the card operating information 131 and the payment required information 181, the processor 120 skips the storing of the card operating information 131 in the memory 130. In this case, normal processor 121 outputs a message indicating the occurrence of the error to the display 160 or the audio unit. When no error occurs in the synchronization between the card operating information 131 and the payment required information 181, the normal processor 121 stores the buffered card operating information 131 in the designated area of the memory 130 and performs a memory reference to output a card image based on the operation of the payment application 107.

At step 311, the normal processor 121 may receive an input signal related to a deletion request, through the input/output interface 150 (e.g., through a button, keypad, or touch function).

When the user input requesting the deletion of the card operating information is received, then at step 315, the processor 120 requests the deletion of the card operating information 131 from the payment service server 200 and deletes the payment required information 181. To this end, the normal processor 121 transmits a message to the payment service server 200 requesting the deletion of the card operating information 131 stored in the payment service server 200. In addition, the security processor 123 deletes the payment required information 181 in the security module 180. For instance, the security processor 123 establishes a communication channel with the security server 300 and deletes the payment required information 181 stored in the security module 180 in response to the control of the security server 300. After the deletion of the card operating information 131, the user may re-register the card through the payment service server 200, the security server 300, and the bank server 400 and re-use the card based on a payment function of the electronic device 100.

At step 305, when the current login user is not the same as the previous login user, then at step 317, the processor 120 requests the deletion of the card operating information 131 and the security processor 123 deletes the payment required information 181 in the security module 180. For instance, when the account login information is received, the security processor 123 may compare the account login information with account information of the last login user account. When the account login information is different from the account information of last login user account, the security processor 123 determines that another user logs in. In this case, the normal processor 121 requests the deletion of the card operating information 131 stored in the payment service server 200. In addition, the security processor 123 establishes a communication channel with the security server 300 and deletes the payment required information 181 in response to the control of the security server 300.

At step 319, the normal processor 121 deletes the previous user account information from the memory 130 and request to delete the previous user account information in the payment service server 200. After the deletion of the previous user account information, another user may register information on a new card issued to him/her to the payment service server 200, the security server 300, and the bank server 400 based on his/her account information and the identification information of the electronic device 100.

According to an embodiment of the present disclosure, a method of processing card operating information may be provided. The method includes receiving an event associated with an execution of a payment function in an electronic device from which the card operating information are deleted in response to a reset operation associated with the payment function, transmitting a message to a server to request a restoration of the card operating information associated with the execution of the payment function, receiving the card operating information from the server, and storing the received card operating information in a memory.

The method may further include collecting account information and obtaining a card issuance history when the collected account information is the same as account information of a previous user, where the obtaining the card issuance history includes transmitting a message requesting the verification of the card issuance history to the server, and receiving the card operating information includes receiving the card operating information corresponding to the card issuance history from the server.

The method may further include outputting a user interface associated with the restoration of at least one card operating information and transmitting a message requesting the restoration of the at least one card operating information selected from the card operating information in response to a user input.

The method may further include synchronizing payment required information corresponding to the received card operating information and stored in a security module with the card operating information.

The method may further include collecting account information, transmitting a message requesting a deletion of the card operating information stored in the server to the server when the collected account information is different from account information of a previous user and deleting payment required information stored in a security module in response to the card operating information, wherein deleting the payment required information includes establishing a communication channel with a security server accessing the security module and deleting the payment required information stored in the security module in response to a control of the security server.

The method may further include deleting the account information of the previous user, which is previously stored.

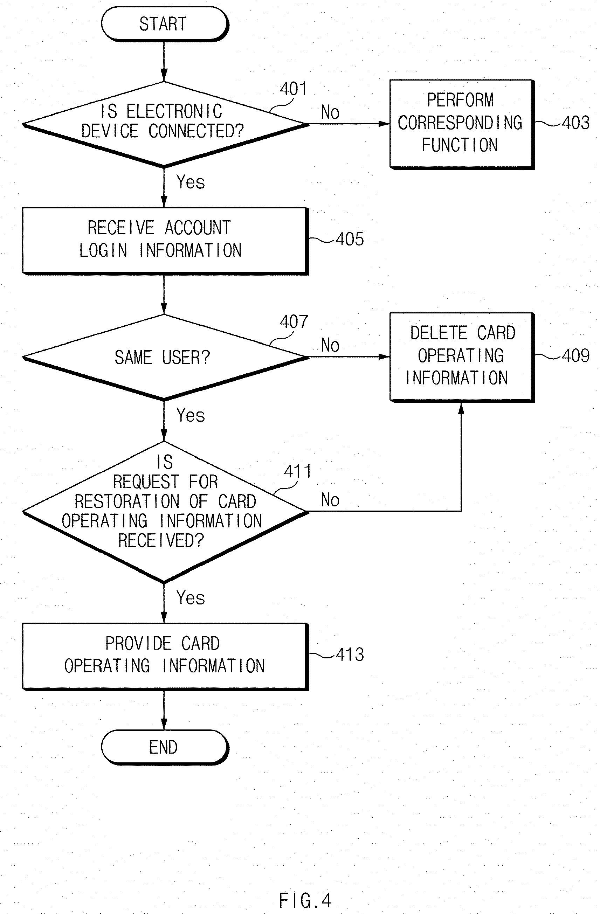

FIG. 4 is a flowchart of a method of processing card operating information in a payment service server, according to an embodiment of the present disclosure.

Referring to FIG. 4, a method of processing card operating information 131 in the payment service server 200 is provided.

At step 401, a processor of the payment service server 200 determines whether a connection request is received from the electronic device 100. When the electronic device 100 performs a connection request, the payment service server 200 may obtain an account-login state of the electronic device 100. When the account is in a login state, the payment service server 200 may skip step 405.

When the payment service server 200 does not receive a connection request from the electronic device 100, then at step 403, the payment service server 200 operates according to a normal function of the payment service server 200.

When the account is not in the login state, then at step 405, the payment service server 200 performs processing for the account login and receives the account login information. For instance, the payment service server 200 transmits the account login screen to the electronic device 100 and receives the account login information corresponding to the user input from the electronic device 100.

At step 407, the payment service server 200 receives information regarding whether the current login user is the same as the previous login user based on the received account login information. The payment service server 200 stores and manages identification information of the electronic device 100 and user account information. When the electronic device 100 is connected to the payment service server 200, the payment service server 200 receives information regarding whether the identification information of the electronic device 100 and the user account information provided when the electronic device 100 was last connected to the payment service server 200 are in agreement with the identification information of the electronic device 100 and the user account information provided when the electronic device 100 is currently connected to the payment service server 200. When the user account information is different, the payment service server 200 determines that another user is connected to the payment service server 200.

When another user is connected to the payment service server 200, then at step 409, the payment service server 200 deletes the card operating information related to the previous user.

When the same user account is connected to the payment server 200, then at step 411, the payment service server 200 may receive, from the electronic device 100, a request for deletion of the card operating information 131 or may receive a request for restoration of the card operating information 131.

When the request for deletion of the card operating information 131 is received from the electronic device 100, then at step 409, the payment service server 200 deletes the card operating information 131 mapped with user account information corresponding to the received user account information.

When the request for restoration of the card operating information 131 is received from the electronic device 100, then at step 413, the payment service server 200 provides the electronic device 100 with the card operating information 131. To this end, the payment service server 200 may search a memory of the payment service server 200 for the card operating information 131 stored after being mapped with the user account information and transmit the found card operating information 131 to the electronic device 100.

The payment service server according to an embodiment includes the communication interface establishing the communication channel with the electronic device, the processor connected to the communication interface, and a memory connected to the processor to store at least one instruction executed by the processor, and the instruction executed by the processor may be configured to receive the message for requesting for the restoration of the card operating information from the electronic device in which the data related to the payment function is in the factory reset or in the payment application reset and to transmit the card operating information corresponding to the restoration request message to the electronic device.

The memory stores and manages the user account information of the electronic device, and when the account information received from the electronic device is the same as the account information of the previous user of the electronic device, the instruction executed by the processor may be configured to automatically transmit the card operating information to the electronic device or to transmit the card operating information to the electronic device in response to the request of the card issuance history verification of the electronic device.

The instruction executed by the processor may be configured to delete the card operating information stored in the memory and associated with the electronic device in the case that the received account information is different from the account information of the previous user, which is mapped in the electronic device.

The instruction executed by the processor may be configured to request the deletion of the payment required information stored in the security module of the electronic device to the security server.

The instruction executed by the processor may be configured to transmit a list of card operating information that is restorable, to the electronic device, and to transmit the card operating information selected by the electronic device, to the electronic device.

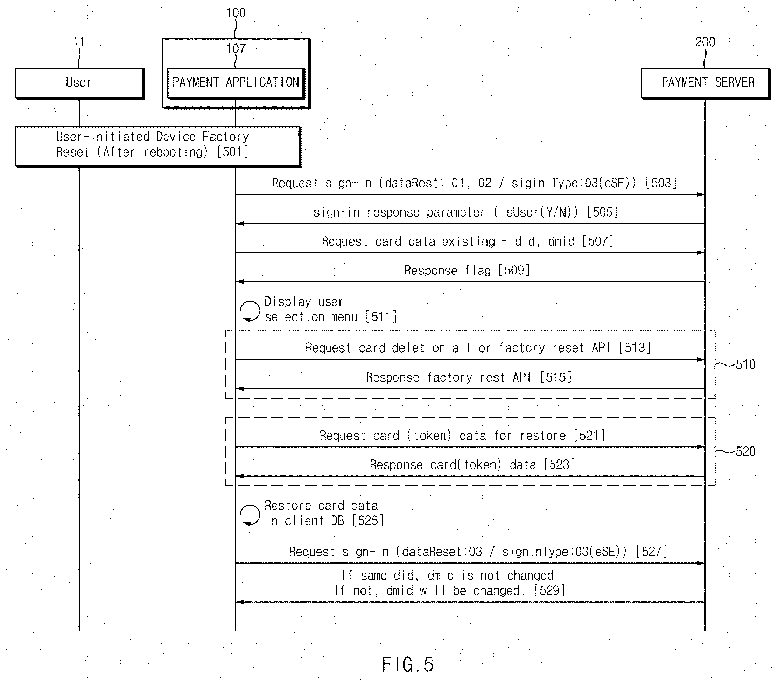

FIG. 5 is a signal flow diagram of a method of processing card operating information, according to an embodiment of the present disclosure.

Referring to FIG. 5, a card operating information restoration system including, a user 11, the electronic device 100, and the payment service server 200 is provided.

At step 501, the user 11 performs the factory reset in association with an initialization of the electronic device 100. Then, the electronic device 100 performs a booting operation in response to a control of the user 11. When the booting operation is completed, the electronic device 100 outputs a screen based on an initial state. In addition, the user 11 deletes application data associated with the payment application 107 of the electronic device 100. Then, when the payment application 107 is executed, the card operating information 131 stored in the electronic device 100 is deleted.

The processor 120 of the electronic device 100 receives an event requesting the execution of the payment application 107. In this case, the processor 120 connects to the payment service server 200 in response to the execution of the payment application 107. The payment application 107 displays the account login screen in response to execution of the initialized payment application 107 to obtain the deleted account information. The payment application 107 connects to the payment service server 200 and displays the account login screen provided from the payment service server 200 when the payment application 107 is requested by the payment service server 200 to provide the account information. After the factory reset of the electronic device 100 or an application data deletion of the payment application 107 (e.g., from a payment application reset or a payment application deletion), the account login may be performed by another application or a setting (e.g., a scheduled task, a user setting, etc.) of the electronic device 100. In this case, the processor 120 obtains the account login information, and the processor 120 does not obtain the account login information when the payment application 107 is executed.

When the account information is obtained, then at step 503, the payment application 107 provides the payment service server 200 with a request message (e.g., "Request sign-in (dataReset: 01, 02/ signinType: 03(eSE))" including the obtained account information. When the message including the account information is received from the payment application 107 of the electronic device 100, the payment service server 200 parses the user account information in the account information and determines whether the parsed user account information is in agreement with previously-stored user account information. When the parsed user account information is in agreement with the previously-stored user account information, the payment service server 200 determines that the user corresponding to the parsed user account information is the same as the previous user. When the parsed user account information is not in agreement with the previously-stored user account information, the payment service server 200 determines that the user 11 corresponding to the parsed user account information is different from the previous user.

At step 505, the payment service server 200 transmits a response parameter (e.g., "isUser (Y/N)") to the electronic device 100 in response to the determination regarding whether the user 11 is the same or a different user as the previous user.

When the electronic device 100 receives verification that the user 11 is the same user, then at step 507, the electronic device 100 transmits a message (e.g., "Request card data existing - did (device identification information), dmid (user account information)") to the payment service server 200 requesting verification of the card issuance history.

When the message requesting the verification of the card issuance history is received by the electronic device 100, then at step 509, the payment service server 200 transmits a response flag to the electronic device 100. The response flag includes the card issuance history information registered in the payment service server 200.

When the response flag is received by the electronic device 100, then at step 511, the electronic device 100 displays a user selection menu. The user selection menu includes a menu item requesting the restoration of at least one card operating information 131 and a menu item requesting the deletion of at least one card operating information 131.

When the menu item associated with the deletion of at least one card operating information 131 is selected in step 511, then step 510 is performed. Step 510 may also be performed when the account of a different user logs in. Step 510 includes steps 513 and 515.

At step 513, the electronic device 100 transmits a card deletion request message (i.e., to request card deletion) or a reset application programming interface (API) message (i.e., to perform a factory reset) to the payment service server 200.

At step 515, the payment service server 200 transmits a reset response message to the electronic device 100. The payment service server 200 deletes the card operating information 131 stored in association with the user account information of the electronic device 100. In addition, the payment service server 200 notifies the security server 300 that the card operating information 131 which was registered in the electronic device 100 and associated with the user account information is deleted. The security server 300 then establishes a security channel with the electronic device 100 and the electronic device 100 deletes the payment required information 181 stored in the security module 180 of the electronic device 100, in response to the control of the server 300. The payment service server 200 notifies the bank server 400 of the deletion of the payment required information 181 of the card which was registered in the electronic device 100 associated with the user account information. The bank server 400 deletes corresponding user account information and payment-related information mapped to the electronic device 100 in response to the notification of the deletion of the payment required information 181 from the payment service server 200.

When the menu item associated with the restoration of the at least one card operating information 131 is selected in step 511, then step 520 is performed. Step 520 includes steps 521 and 523.

At step 521, the electronic device 100 transmits a card restoration request message (e.g., "Request card (token) data for restore") to the payment service server 200 requesting restoration of the card.

At step 523, the payment service server 200 transmits a message (e.g., "Response card (token) data") including the card operating information 131 to the electronic device 100. The menu item associated with the restoration of the at least one card operating information 131 in the user selection menu, allows the user 11 to select the restoration of the card operating information 131 of at least one card among a plurality of cards. Accordingly, when the user requests the restoration of multiple cards among previously-registered cards, the card restoration request message includes information requesting the restoration of the multiple cards. In this case, the payment service server 200 transmits, to the electronic device 100, the card operating information 131 including only card operating information 131 of the cards requested by the user 11. The payment service server 200 deletes the card operating information 131, which is not requested to be restored. Alternatively, the payment service server 200 keeps the card operating information 131, which is not requested to be restored, for a predetermined time and deletes the card operating information 131, which is not requested to be restored, after the predetermined time elapses. The payment service server 200 may periodically notify the electronic device 100 that there is card operating information 131 that is not restored and transmit a message to the electronic device 100 asking whether to restore or delete the card operating information 131. The menu item associated with the restoration of the card operating information 131 in the user selection menu includes only a menu item allowing card operating information 131 of all previously registered cards to be restored. In this case, when the restoration of the card operating information 131 is requested, the payment service server 200 provides the electronic device 100 with the corresponding user account information and all of the card operating information 131 registered based on the electronic device 100.

When the payment service server 200 transmits the card operating information 131 to the electronic device 100 in response to the request for the restoration of the card operating information 131, then at step 525, the electronic device 100 restores the card operating information 131. The electronic device 100 stores the card operating information 131 in the predetermined area of the memory 130. In addition, the security processor 123 of the electronic device 100 synchronizes the payment required information 181 stored in the security module 180 with the card operating information 131. When an error occurs during the synchronization process, the electronic device 100 outputs an error message with respect to the non-synchronized card operating information 131.

After the restoration or deletion of the card operating information is executed, at step 527, the electronic device 100 transmits, to the payment service server 200, a verification request message (e.g., "Request sign-in (dataReset:03/signinType:03(eSE))"), including the account login information. The electronic device 100 may use the account login information obtained in step 503 without displaying a separate account login screen or collecting the account information.

At step 529, the payment service server 200 transmits a verification response message to the electronic device 100 based on whether the current login user 11 is the same as the previous login user. For instance, when the current login user 11 is the same as the previous login user, the payment service server 200 maintains the user account information without changing the user account information. When the current login user 11 is different from the previous login user, the payment service server 200 matches the user account information of the current login user 11 with the identification information of the electronic device 100 and stores the matched information in the payment service server 200. In this case, the electronic device 100 deletes the previous user account information and replaces it with user account information of the current login user 11.

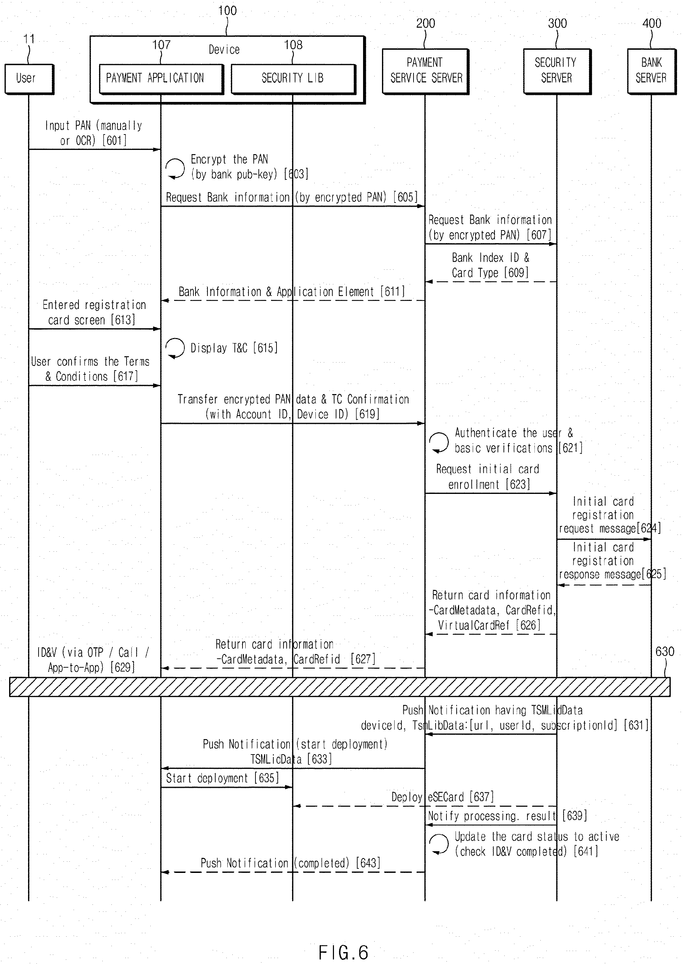

FIG. 6 is a signal flow diagram of a method of registering a card, according to an embodiment of the present disclosure.

Referring to FIG. 6, a card registration system includes the user 11, the electronic device 100, the payment service server 200, the security server 300, and the bank server 400.

At step 601, the processor 120 of the electronic device 100 may execute the payment application 107 in response to a scheduled execution order or a user input. The payment application 107 displays a designated screen through the display 160 while being executed. For instance, the payment application 107 provides a user interface to input a primary account number (PAN) of a card. The input of the PAN may be executed by an input of the user 11, automatically writing-in pre-stored information, or analyzing an obtained image via optical character recognition (OCR).

At step 603, the payment application 107 encrypts the PAN information. In this operation, the payment application 107 encrypts the PAN using a public key provided from a bank or a financial company associated with the card.

At step 605, the payment application 107 transmits a bank information request message corresponding to the encrypted PAN information to the payment service server 200.

At step 607, the payment service server 200 transmits the bank information request message (Request Bank information (by encrypted PAN)) to the security server 300.

At step 609, the security server 300 transmits bank identification information (e.g., Bank Index ID) and card type information (e.g., Card Type) to the payment service server 200.

At step 611, the payment service server 200 transmits bank information and an application element to the payment application 107 of the electronic device 100.

At step 613, the electronic device 100 displays a screen corresponding to the bank information and application element through the display 160. The electronic device 100 may receive an input signal, via the input/output interface 150 or the display 160, to enter a card registration screen.

At step 615, the payment application 107 displays user terms and conditions through the display 160.

At step 617, the electronic device 100 receives a verification input signal, via the input/output interface 150 or the display 160, indicating that the user 11 accepts the user terms and conditions.

At step 619, the payment application 107 transmits, to the payment service server 200, an encrypted contract message, including the encrypted PAN information, device information, and the terms and conditions information.

At step 621, the payment service server 200 performs a user authentication and a basic verification.

When the user authentication and the basic verification complete normally, then at step 623, the payment service server 200 transmits an initial card registration request message to the security server 300.

At steps 624 and 625, respectively, the security server 300 transmits the initial card registration request message to the bank server 400 and receives a response message from the bank server 400 when the card registration is completed.

At step 626, the security server 300 may transmits card-related information (e.g., "card information: CardMetadata, CardRefID, VirtualCardRef") to the payment service server 200. The CardMetadata includes information associated with the card name, a card product name, the card image, and the like. The CardRefID includes information obtained by mapping the actual card to a virtual electronic card which is used through the electronic device 100, and the VirtualCardRef includes information regarding the virtual electronic card.

At step 627, the payment service server 200 transmits the card-related information provided from the security server 300 to the payment application 107. In this operation, the payment service server 200 transmits to the payment application, a portion of the card-related information, i.e., including CardMetadata and CardRefID and excluding VirtualCardRef.

At step 629, the user 11 receives a message (e.g., a text message or a voice message) associated with the user verification from the bank server 400, through the electronic device 100, and the user 11 may input verification information included in the received message and transmit the verification information to the bank server 400 using the electronic device 100. When the user verification is completed based on the verification information, the bank server 400 notifies the completion of the user verification to the security server 300.

At step 631, the security server 300 may push a notification message including security processing data to the payment service server 200. The notification message may include a DeviceID, TsmLibData:[url, userID, subscriptionID], and the like.

At step 633, the payment service server 200 transmits a security data processing notification message to the payment application 107.

At step 635, the payment application 107 transmits a security data processing request to a security Lib 108 (or the security processor 123).

At step 637, the security Lib 108 establishes a security communication channel with the security server 300 and determines a storing position, e.g., an eSE, of card information (i.e., eSECard information) in the electronic device 100 and stores the card information based on the established security communication channel. For instance, the security Lib 108 receives the payment required information 181 from the security server 300 and stores the payment required information 181 in the security module 180.

At step 639, when the payment required information is completely transmitted, the security server 300 notifies the payment service server 200 that the security data processing is completed.

At step 641, the payment service server 200 updates the card status to active.

At step 643, the payment service server 200 pushes a completion message to the payment application 107.

According to various embodiments, the electronic device includes a communication interface, a first memory storing one or more account information corresponding to the user of the electronic device, a second memory (e.g., security module, eSE) storing at least one payment required information (e.g., information needed to perform the payment based on the payment application installed in the electronic device, a key value used to pay, a token, etc.), and a processor. The processor may be configured to obtain the account information in association with the payment function, transmit the account information to an external electronic device (e.g., the payment service server) through the communication interface, receive a response from the external electronic device based on the transmission, receive the card operating information (e.g., image information, such as the image related to the actual card, number or character information related to information printed on the actual card, the card name, the card product information, the card content, which are displayed through the display in response to the operation of the payment application by the electronic device) corresponding to the at least one payment required information from the external electronic device in the case that the response indicates that the account information correspond to the at least one payment required information stored in the second memory, store the card operating information in the first memory, and receive the request to delete the at least one payment required information from another external electronic device (e.g., TSM) when the response indicates that the account information does not correspond to the at least one payment required information stored in the second memory.

The second memory includes an embedded secure element. The embedded secure element may be configured to delete the at least one payment required information in response to the request.

The processor may be configured not to delete the at least one payment required information stored in the second memory.

The processor may be configured to perform the reset operation with respect to the electronic device and perform the obtain operation after the reset operation.

The electronic device corresponding to the payment service server includes one or more external electronic devices (e.g., a memory storing one or more account information corresponding to the user of the electronic device 100 and one or more identification information corresponding to the one or more external electronic devices and a processor (e.g., a processor for the payment service server)). The processor may be configured to receive the account information and the identification information from the external electronic device, obtain information regarding whether the payment required information corresponding to the identification information is stored in the security module connected to the external electronic device, determine whether account information corresponding to the payment required information is in agreement with the account information based on at least the verified result, transmit the card operating information corresponding to the payment required information to the external electronic device when the account information corresponding to the payment required information is in agreement with the account information, and transmit a request to delete the payment required information from the security module to another external electronic device (e.g., TSM) when the account information corresponding to the payment required information is not in agreement with the account information.

According to an embodiment of the present disclosure, an electronic device may include a communication interface, a processor configured to be connected to the communication interface and a memory configured to be connected to the processor and store at least one instruction executed by the processor, wherein the instruction, when executed by the processor, is configured to transmit a message requesting a restoration of card operating information to a server when a payment function is executed in the electronic device from which the card operating information is deleted in accordance with a reset operation associated with the payment function, and store the received card operating information in the memory when the card operating information is received from the server.

The instruction executed by the processor may be configured to collect account information, determine whether the collected account information is the same as account information of a previous user, transmit a message requesting a verification of a card issuance history to the server when the collected account information is the same as the account information of the previous user, and receive the card operating information corresponding to the card issuance history from the server.

The instruction executed by the processor may be configured to display a user interface associated with the restoration of at least one card operating information.

The instruction executed by the processor may be configured to transmit a message requesting the restoration of the at least one card operating information selected from the card operating information in response to a user input to the server.

The instruction executed by the processor may be configured to synchronize payment required information corresponding to the received card operating information stored in a security module with the card operating information.

The instruction executed by the processor may be configured to collect account information, transmit a message requesting a deletion of the card operating information stored in the server, to the server, when the collected account information is different from account information of a previous user, and delete payment required information stored in a security module in response to the card operating information.

The instruction executed by the processor may be configured to establish a communication channel with a security server accessing the security module and delete the payment required information stored in the security module in response to a control of the security server.

The instruction executed by the processor may be configured to delete the stored account information of the previous user.

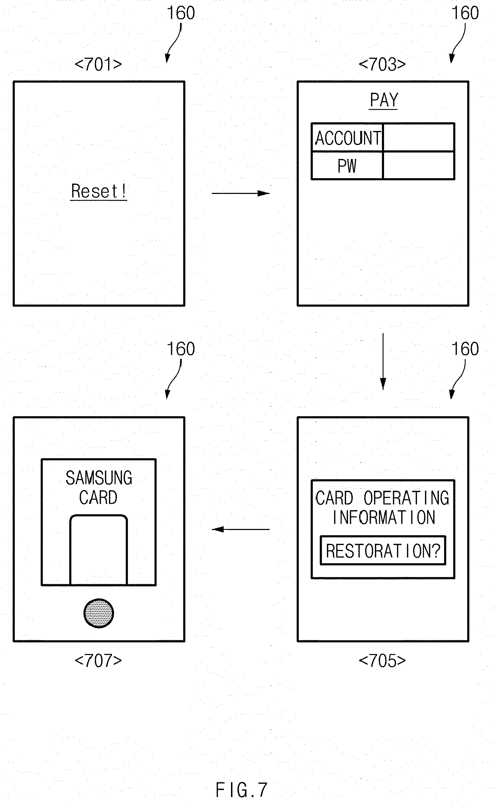

FIG. 7 illustrates a screen interface associated with a function of restoring card operating information in an electronic device, according to an embodiment of the present disclosure.

Referring to FIG. 7, a screen interface in the electronic device 100 is provided. The electronic device 100 may process a reset operation in response to a request for a factory reset or the payment application 107 reset (or the request for the deletion of the payment application 107). According to the reset operation, the display 160 displays a screen <701> associated with the reset process. As illustrated in screen <701>, a text associated with the reset operation may be output on the screen. However, the display 160 may, alternatively or additionally, display an image or output an audio associated with the reset operation. In addition, the display 160 may output information to notify which data is deleted through the reset operation.

When an application requiring an account login is executed after the reset operation, the electronic device 100 displays a screen <703> including an account login information input window. For instance, when the application requiring the account login is requested to be executed after the factory reset is performed, the processor 120 of the electronic device 100 displays a screen <703> related to the account login information input through the display 160 in association with the execution of the application. When the payment application 107 is executed after the application data of the payment application 107 is deleted, the processor 120 of the electronic device 100 displays an account login screen of the payment application 107. The account login screen may be, for example, a screen provided by the payment service server 200.

When the user account information is input through the account login screen, the processor 120 of the electronic device 100 obtains user account information. For instance, the processor 120 may obtain information regarding whether the current user account information is the same as the previous user account information. To this end, the processor 120 transmits the user account information to the payment service server 200 and receives a response message from the payment service server 200 indicating whether the user account information of the current user is different from the account information of the previous user. That is, the processor 120 may previously store the user account information and obtain information regarding whether the input account information is in agreement with previously-stored account information, to verify whether the current login user is the same as the previous login user. When a message indicating that another user account is input is received from the payment service server 200 after the factory reset, the processor 120 may determine that the account of another user is logged in.

When the same user inputs the account information after the factory reset, the processor 120 of the electronic device 100 requests verification of the card issuance history of the payment service server 200. When the card issuance history exists, the payment service server 200 transmits a message associated with restoration of card operating information 131 to the electronic device 100. When the message associated with the restoration of the card operating information 131 is received, the electronic device 100 displays a screen <705> including a popup window or a menu associated with the restoration of the card operating information 131 through the display 160.

When the user selects the restoration of the card operating information 131, the processor 120 transmits the restoration request message to the payment service server 200 and receives the card operating information 131 from the payment service server 200. The processor 120 stores the received card operating information 131 in the memory 130 and synchronizes the received card operating information 131 with the payment required information 181 stored in the security module 180.

The payment service server 200 transmits a list of the card operating information 131 in the message associated with restoration of card operating information 131. Accordingly, the processor 120 displays the list corresponding to the card operating information 131 through the display 160. The processor 120 transmits, to the payment service server 200, a restoration request message for at least one card operating information 131 selected from the card operating information 131 included in the list. The payment service server 200 transmits only the card operating information 131, which is requested to be restored, to the electronic device 100.

When the payment application 107 is requested to be executed after the card operating information 131 is normally restored, the processor 120 displays a screen <707> with a designated card image through the display 160. For instance, when a designated event (e.g., a touch event in which the screen is dragged into a center portion of the display 160 from an area including a home button) occurs, the processor 120 displays the card image corresponding to the selected card operating information 131 among the restored card operating information 131 through the display 160.

In this way, the card operating information 131, which is deleted during a reset process, may be selectively restored.

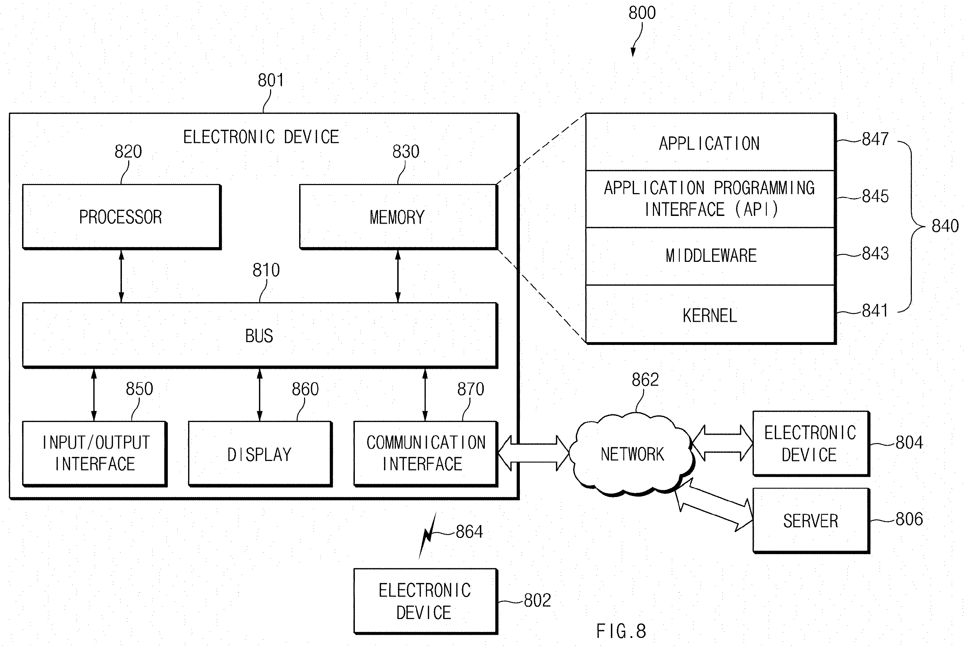

FIG. 8 is a block diagram of a configuration of an electronic device in a network environment, according to an embodiment of the present disclosure.

Referring to FIG. 8, a networking environment 800 includes an electronic device 801. The electronic device 801 includes a bus 810, a processor 820, a memory 830, an input and output interface 850, a display 860, and a communication interface 870. At least one of the components may be omitted from the electronic device 801, or other components may be additionally included in the electronic device 801.

The bus 810 is a circuit which connects the components 820 to 870 with each other and transmits a communication signal (e.g., a control message and/or data) between the components.

The processor 820 may include one or more of a central processing unit (CPU), an application processor (AP), or a communication processor (CP). For example, the processor 820 performs calculation or data processing about control and/or communication of the components of the electronic device 801.

The memory 830 may include a volatile and/or non-volatile memory. The memory 830 stores a command or data associated with the components of the electronic device 801. The memory 830 stores software and/or a program 840. The program 840 includes a kernel 841, a middleware 843, an API 845, and/or at least one application 847. At least part of the kernel 841, the middleware 843, or the API 845 may be referred to as an OS.

The kernel 841 controls or manages system resources (e.g., the bus 810, the processor 820, or the memory 830) used to execute an operation or function implemented in the other programs (e.g., the middleware 843, the API 845, or the application 847). Also, as the middleware 843, the API 845, or the application 847 accesses a separate component of the electronic device 801, the kernel 841 provides an interface which may control or manage system resources.

The middleware 843 may play a role of an intermediary, such that the API 845 or the application 847 communicates with the kernel 841 to communicate data.

Also, the middleware 843 processes one or more work requests, received from the application 847, in order of priority. For example, the middleware 843 may assign the application 847 a priority for using the system resources (the bus 810, the processor 820, or the memory 830) of the electronic device 801. For example, the middleware 843 performs scheduling or load balancing for the one or more work requests by processing the one or more work requests in order of the priority assigned to the application 847.

The API 845 is an interface which allows the application program 847 to control a function provided from the kernel 841 or the middleware 843. For example, the API 845 includes at least one interface or function (e.g., a command) for file control, window control, image processing, or text control, and the like.

The input and output interface 850 may is an interface which transmits a command or data input from a user or another external device to other components of the electronic device 801. Also, the input and output interface 850 outputs an instruction or data received from other components of the electronic device 801 to the user or the other external device.

The display 860 may include a liquid crystal display (LCD), a light emitting diode (LED) display, an organic LED (OLED) display, a microelectromechanical systems (MEMS) display, or an electronic paper display. The display 860 displays a variety of content (e.g., text, images, videos, icons, or symbols, and the like) to the user. The display 860 may include a touch screen, and may receive a touch, gesture, proximity, or hovering input using an electronic pen or part of a body of the user.

The communication interface 870 establishes communication between the electronic device 801 and a first external electronic device 802, a second external electronic device 804, and a server 806. For example, the communication interface 870 may be connected to a first electronic device 802 through short-range communication 864 and may be connected to a second external electronic device 804 and a server 806 through a network 862 via wireless communication or wired communication.

The wireless communication may use at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like as a cellular communication protocol. Also, the wireless communication may include the short-range communication 864. The short-range communication 864 may include at least one of Wi-Fi communication, Bluetooth (BT) communication, near field communication (NFC), or global navigation satellite system (GNSS) communication.

The GNSS includes at least one of a global positioning system (GPS), Glonass, Beidou navigation satellite system (Beidou), or Galileo (i.e., the European global satellite-based navigation system) according to an available area or a bandwidth. Hereinafter, the term "GPS" may be used interchangeably with the term "GNSS".

The wired communication may include at least one of universal serial bus (USB) communication, high definition multimedia interface (HDMI) communication, recommended standard 232 (RS-232) communication, or plain old telephone service (POTS) communication, and the like.

The network 862 may include a telecommunications network, for example, at least one of a computer network (e.g., a local area network (LAN) or a wide area network (WAN)), the Internet, or a telephone network.

Each of the first and second external electronic devices 802 and 804 may be the same type or a different type of device as the electronic device 801.

The server 806 may include a group of one or more servers.

All or some of operations executed in the electronic device 801 may be executed in another electronic device or a plurality of electronic devices (e.g., the first external electronic device 802, the second external electronic device 804, or the server 806). If the electronic device 801 should perform any function or service automatically or according to a request, it may request another device (e.g., the first external electronic device 802, the second external electronic device 804, or the server 806) to perform at least part of the function or service, rather than executing the function or service for itself or in addition to the function or service. The other electronic device (e.g., the first external electronic device 802, the second external electronic device 804, or the server 806) may execute the requested function or the added function and transmit the executed result to the electronic device 801. The electronic device 801 processes the received result without change or additionally and provides the requested function or service. For this purpose cloud computing technologies, distributed computing technologies, or client-server computing technologies may be used.

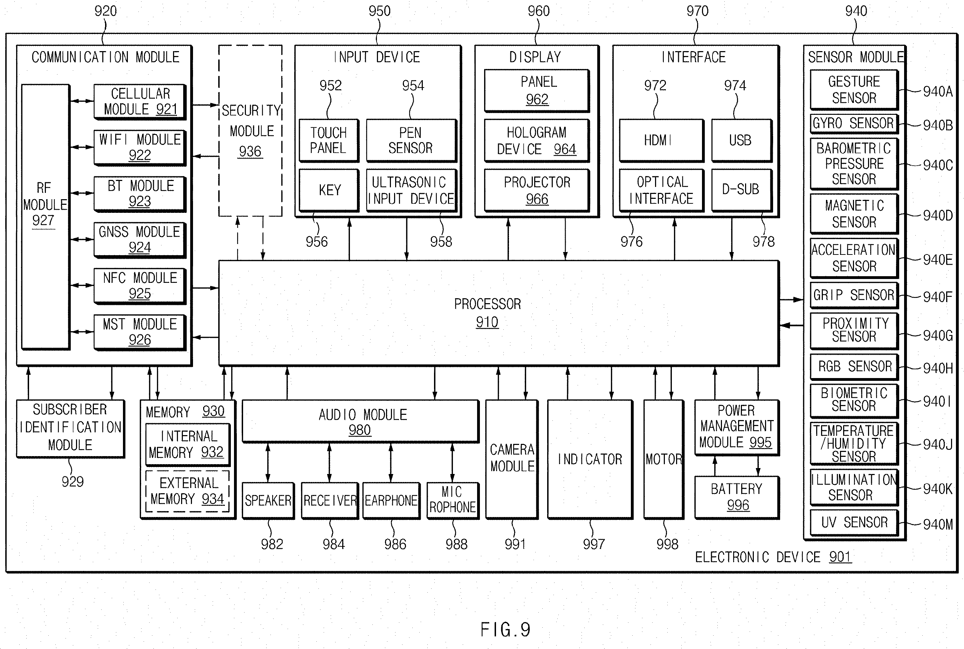

FIG. 9 is a block diagram of a configuration of an electronic device, according to an embodiment of the present disclosure.

Referring to FIG. 9, an electronic device 901 is provided. The electronic device 901 includes one or more processors 910 (e.g., APs), a communication module 920, a subscriber identification module (SIM) 929, a memory 930, a security module 936, a sensor module 940, an input device 950, a display 960, an interface 970, an audio module 980, a camera module 991, a power management module 995, a battery 996, an indicator 997, and a motor 998.

The processor 910 may drive an OS or an application program to control a plurality of hardware or software components connected thereto and process and compute a variety of data. The processor 910 may be implemented with, for example, a system on chip (SoC). The processor 910 may include a graphic processing unit (GPU) and/or an image signal processor (ISP). The processor 910 may include at least some (e.g., a cellular module 921) of the components of the electronic device 901. The processor 910 loads a command or data received from at least one of the other components (e.g., a non-volatile memory) into a volatile memory to process the data and store various data in a non-volatile memory.

The communication module 920 includes the cellular module 921, a Wi-Fi module 922, a BT module 923, a GNSS module 924 (e.g., a GPS module, a Glonass module, a Beidou module, or a Galileo module), an NFC module 925, an MST module 926, and a radio frequency (RF) module 927.

The cellular module 921 provides a voice call service, a video call service, a text message service, or an Internet service through a communication network. The cellular module 921 identifies and authenticates the electronic device 901 in a communication network using the SIM 929 (e.g., a SIM card). The cellular module 921 may perform at least part of functions which may be provided by the processor 910. The cellular module 921 may include a communication processor (CP).

The cellular module 921, the Wi-Fi module 922, the BT module 923, the GNSS module 924, the NFC module 925, or the MST module 926 may include a processor for processing data transmitted and received through the corresponding module. At least some of the cellular module 921, the Wi-Fi module 922, the BT module 923, the GNSS module 924, the NFC module 925, or the MST module 926 may be included in one integrated chip (IC) or one IC package.

The RF module 927 transmits and receives a communication signal (e.g., an RF signal). The RF module 927 may include a transceiver, a power amplifier module (PAM), a frequency filter, or a low noise amplifier (LNA), or an antenna. At least one of the cellular module 921, the Wi-Fi module 922, the BT module 923, the GNSS module 924, the NFC module 925, or the MST module 926 may transmit and receive an RF signal through a separate RF module.

The SIM 929 may include a card which includes a SIM and/or an embedded SIM. The SIM 929 includes unique identification information (e.g., an integrated circuit card identifier (ICCID)) or subscriber information (e.g., an international mobile subscriber identity (IMSI)).

The memory 930 may include an internal memory 932 or an external memory 934.

The internal memory 932 may include at least one of a volatile memory (e.g., a dynamic random access memory (DRAM), a static RAM (SRAM), a synchronous dynamic RAM (SDRAM), and the like), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), a hard drive, or a solid state drive (SSD)).

The external memory 934 may include a flash drive, for example, a compact flash (CF), a secure digital (SD), a micro-SD, a mini-SD, an extreme digital (xD), a multimedia car (MMC), or a memory stick. The external memory 934 may operatively and/or physically connect with the electronic device 901 through various interfaces.

The secure module 936 may be a module which has a relatively higher secure level than the memory 930 and may be a circuit which stores secure data and guarantees a protected execution environment. The secure module 936 may be implemented with a separate circuit and includes a separate processor. The secure module 936 may include an embedded secure element (eSE) which is present in a removable smart chip or a removable SD card or is embedded in a fixed chip of the electronic device 901. Also, the secure module 936 may be driven by an OS different from the OS of the electronic device 901. For example, the secure module 936 may operate based on a JCOP OS.

The sensor module 940 measures a physical quantity or detects an operation state of the electronic device 901, and converts the measured or detected information to an electric signal. The sensor module 940 includes at least one of a gesture sensor 940A, a gyro sensor 940B, a barometric pressure sensor 940C, a magnetic sensor 940D, an acceleration sensor 940E, a grip sensor 940F, a proximity sensor 940G, a red, green, blue (RGB) sensor 940H, a biometric sensor 940I, a temperature/humidity sensor 940J, an illumination sensor 940K, or an ultraviolet (UV) sensor 940M. Additionally or alternatively, the sensor module 940 may further include an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 940 may further include a control circuit for controlling one or more sensors included therein. The electronic device 901 may further include a processor configured to control the sensor module 940, as part of the processor 910 or to be independent of the processor 910. While the processor 910 is in a sleep state, the electronic device 901 may control the sensor module 940.

The input device 950 includes a touch panel 952, a (digital) pen sensor 954, a key 956, or an ultrasonic input device 958.

The touch panel 952 may use at least one of a capacitive type, a resistive type, an infrared type, or an ultrasonic type. Also, the touch panel 952 may further include a control circuit. The touch panel 952 may further include a tactile layer and provide a tactile reaction to a user.

The (digital) pen sensor 954 may be part of the touch panel 952 or may include a separate sheet for recognition.

The key 956 may include a physical button, an optical key, or a keypad.

The ultrasonic input device 958 detects ultrasonic waves generated by an input tool using a microphone 988 to verify data corresponding to the detected ultrasonic wave.

The display 960 includes a panel 962, a hologram device 964, or a projector 966.

The panel 962 may be implemented to be flexible, transparent, or wearable. The panel 962 and the touch panel 952 may be integrated into one module.

The hologram device 964 displays a stereoscopic image in a space using interference of light.

The projector 966 projects light onto a screen to display an image. The screen may be positioned inside or outside the electronic device 901.

The display 960 may further include a control circuit for controlling the panel 962, the hologram device 964, or the projector 966.

The interface 970 includes a high-definition multimedia interface (HDMI) 972, a USB 974, an optical interface 976, or a D-subminiature 978. Additionally or alternatively, the interface 970 may include a mobile high definition link (MHL) interface, an SD card/multimedia card (MMC) interface, or an infrared data association (IrDA) standard interface.

The audio module 980 converts a sound and an electric signal in dual directions. The audio module 980 processes sound information input or output through a speaker 982, a receiver 984, an earphone 986, or the microphone 988.

The camera module 991 is a device which captures a still image and a moving image. The camera module 991 may include one or more image sensors (e.g., a front sensor or a rear sensor), a lens, an ISP, or a flash (e.g., an LED or a xenon lamp).

The power management module 995 manages power of the electronic device 901. The power management module 995 may include a power management integrated circuit (PMIC), a charger IC or a battery gauge. The PMIC may have a wired charging method and/or a wireless charging method. The wireless charging method includes a magnetic resonance method, a magnetic induction method, or an electromagnetic method. An additional circuit for wireless charging, for example, a coil loop, a resonance circuit, or a rectifier may be further provided. The battery gauge measures a remaining capacity, voltage, current, or temperature of the battery 996.

The battery 996 may include, for example, a rechargeable battery or a solar battery.

The indicator 997 displays a specific state of the electronic device 901 or part (e.g., the processor 910) thereof, for example, a booting state, a message state, or a charging state.

The motor 998 converts an electric signal into a mechanical vibration and generates a vibration or a haptic effect. The electronic device 901 includes a processing unit (e.g., a GPU) for supporting a mobile TV. The processing unit for supporting the mobile TV processes media data according to standards, such as a digital multimedia broadcasting (DMB) standard, a digital video broadcasting (DVB) standard, or a mediaFloTM standard.

Each of the above-mentioned elements of the electronic device 901 may be configured with one or more components, and names of the corresponding elements may be changed according to the type of the electronic device. The electronic device 901 may include at least one of the above-mentioned elements, some elements may be omitted from the electronic device 901, or other additional elements may be further included in the electronic device 901. Also, some of the elements of the electronic device 901 may be combined with each other to form one entity, thereby making it possible to perform the functions of the corresponding elements in the same manner as before the combination.

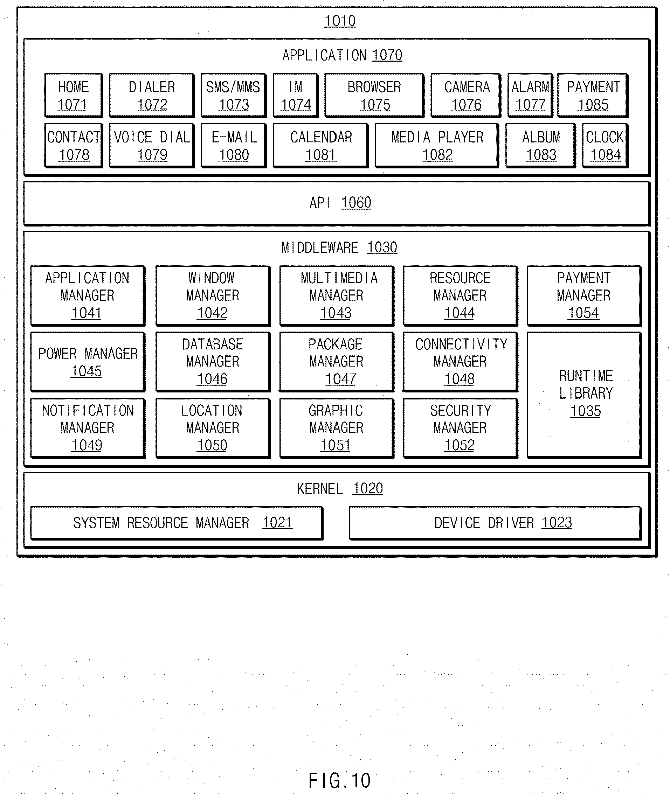

FIG. 10 is a block diagram of a configuration of a program module of an electronic device, according to an embodiment of the present disclosure.

Referring to FIG. 10, a program module 1010 of the electronic device 801 is provided. The program module 1010 includes an OS for controlling resources associated with the electronic device 801 and/or various applications which are executed on the OS. The OS may be, for example, AndroidTM, iOSTM, WindowsTM, SymbianTM, TizenTM, or BadaTM.

The program module 1010 includes a kernel 1020, a middleware 1030, an API 1060, and/or an application 1070. At least part of the program module 1010 may be preloaded on the electronic device 801, or may be downloaded from an external electronic device (e.g., the first external electronic device 802, the second external electronic device 804, or the server 806).

The kernel 1020 includes a system resource manager 1021 and/or a device driver 1023.

The system resource manager 1021 controls, assigns, and collects system resources. The system resource manager 1021 may include a process management unit, a memory management unit, or a file system management unit.

The device driver 1023 may include a display driver, a camera driver, a BT driver, a shared memory driver, a USB driver, a keypad driver, a Wi-Fi driver, an audio driver, or an inter-process communication (IPC) driver.

The middleware 1030 provides functions the application 1070 needs in common, and provides various functions to the application 1070 through the API 1060 such that the application 1070 efficiently uses limited system resources in the electronic device 801. The middleware 1030 (e.g., the middleware 843) includes at least one of a runtime library 1035, an application manager 1041, a window manager 1042, a multimedia manager 1043, a resource manager 1044, a power manager 1045, a database manager 1046, a package manager 1047, a connectivity manager 1048, a notification manager 1049, a location manager 1050, a graphic manager 1051, a security manager 1052, or a payment manager 1054.

The runtime library 1035 includes a library module used by a compiler to add a new function through a programming language while the application 1070 is executed. The runtime library 1035 performs a function about input and output management, memory management, or an arithmetic function.

The application manager 1041 manages a life cycle of at least one of the application 1070.

The window manager 1042 manages graphic user interface (GUI) resources used on a screen of the electronic device 801.

The multimedia manager 1043 determines a format utilized for reproducing various media files and encodes or decodes a media file using a codec corresponding to the corresponding format.

The resource manager 1044 manages source codes of at least one of the application 1070, and manages resources of a memory or a storage space.

The power manager 1045, acting together with a basic input/output system (BIOS), manages a battery or a power source, and provides power information utilized for an operation of the electronic device 801.

The database manager 1046 generates, searches, or changes a database to be used in at least one of the application 1070.

The package manager 1047 manages installation or update of an application distributed by a type of a package file.

The connectivity manager 1048 manages wireless connection, such as a Wi-Fi connection or a BT connection.

The notification manager 1049 displays or notifies a user of events, such as an arrival message, an appointment, and proximity notification, by a method which does not disturb to the user.

The location manager 1050 manages location information of the electronic device 801.

The graphic manager 1051 manages a graphic effect to be provided to the user or a user interface (UI) related to the graphic effect.

The security manager 1052 provides all security functions utilized for system security or user authentication.

When the electronic device 801 has a phone function, the middleware 1030 may further include a telephony manager for managing a voice or video communication function of the electronic device 801.

The middleware 1030 includes a middleware module which configures combinations of various functions of the above-described components. The middleware 1030 provides a module which specializes according to kinds of OSs to provide a differentiated function. Also, the middleware 1030 may dynamically delete some of old components or may add new components.

The API 1060 is a set of API programming functions, and is provided with different components according to OSs. For example, in case of AndroidTM or iOSTM, one API set may be provided according to platforms. In case of TizenTM, two or more API sets may be provided according to platforms.

The application 1070 includes one or more of a home application 1071, a dialer application 1072, a short message service/multimedia message service (SMS/MMS) application 1073, an instant message (IM) application 1074, a browser application 1075, a camera application 1076, an alarm application 1077, a contact application 1078, a voice dial application 1079, an e-mail application 1080, a calendar application 1081, a media player application 1082, an album application 1083, a clock application 1084, and a payment application 1085. The application 1070 may additionally include a health care application (e.g., an application for measuring a quantity of exercise or a level of blood sugar) or an environment information application (e.g., an application for providing atmospheric pressure information, humidity information, or temperature information).

The application 1070 includes an information exchange application for exchanging information between the electronic device 801 and an external electronic device (e.g., the first external electronic device 802 or the second external electronic device 804). The information exchange application may include a notification relay application for transmitting specific information to the external electronic device or a device management application for managing the external electronic device.

The notification relay application transmits notification information, which is generated by other applications (e.g., the SMS/MMS application, the e-mail application, the health care application, or the environment information application, and the like) of the electronic device 801, to the external electronic device (e.g., the first external electronic device 802 or the second external electronic device 804). Also, the notification relay application receives notification information from the external electronic device, and provides the received notification information to the user of the electronic device 801.

The device management application manages (e.g., install, delete, or update) at least one function (e.g., a function of turning on/off the external electronic device itself (or partial components) or a function of adjusting brightness (or resolution) of a display) of the external electronic device (e.g., the first external electronic device 802 or the second external electronic device 804) which communicates with the electronic device 801, an application which operates in the external electronic device, or a service (e.g., a call service or a message service) provided from the external electronic device.

The application 1070 may include an application (e.g., the health card application of a mobile medical device) which is preset according to attributes of the external electronic device (e.g., the first external electronic device 802 or the second external electronic device 804). The application 1070 may include an application received from the external electronic device (e.g., the server 806, the first external electronic device 802, or the second external electronic device 804). The application 1070 may include a preloaded application or a third party application which may be downloaded from a server. Names of the components of the program module 1010 according to various embodiments of the present disclosure may differ according to kinds of OSs.

According to various embodiments, at least part of the program module 1010 may be implemented with software, firmware, hardware, or a combination thereof. At least part of the program module 1010 may be implemented (e.g., executed) by a processor. At least part of the program module 1010 includes a module, a program, a routine, sets of instructions, or a process, and the like for performing one or more functions.

The term "module" used herein may refer to a unit including one of hardware, software, and firmware or a combination thereof. The term "module" may be used interchangeably with the terms "unit", "logic", "logical block", "component", or "circuit". The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is known or will be developed in the future, for performing certain operations.

According to various embodiments of the present disclosure, at least part of a device (e.g., modules or the functions) or a method (e.g., operations) may be implemented with instructions stored in a computer-readable storage medium which has a program module. When the instructions are executed, one or more processors perform functions corresponding to the instructions. The computer-readable storage medium may be a memory.

The computer-readable storage medium may include a hard disc, a floppy disk, magnetic media (e.g., a magnetic tape), optical media (e.g., a compact disc read only memory (CD-ROM) and a DVD), magneto-optical media (e.g., a floptical disk), a hardware device (e.g., a ROM, a random access memory (RAM), or a flash memory), and the like. Also, the program instructions may include not only mechanical code compiled by a compiler but also high-level language code which may be executed by a computer using an interpreter. The above-mentioned hardware device may be configured to operate as one or more software modules to perform operations according to various embodiments of the present disclosure, and vice versa.

The modules or program modules may include at least one or more of the above-mentioned components, some of the above-mentioned components may be omitted, or other additional components may be further included. Operations executed by modules, program modules, or other components may be executed by a successive method, a parallel method, a repeated method, or a heuristic method. Also, some operations may be executed in a different order or may be omitted, and other operations may be added.

Embodiments of the present disclosure described and shown in the drawings are provided as examples to describe technical content and help understanding but do not limit the present disclosure. Accordingly, it should be understood by those skilled in the art, that besides the embodiments listed herein, all modifications or modified forms derived based on the technical ideas of the present disclosure may be included in the present disclosure without departing from the spirit and the scope of the present disclosure, which is defined, not by the detailed description and embodiments, but by the appended claims and their equivalents.

## Claims

1. An electronic device, comprising:
a processor; and
a memory that stores at least one instruction, which when executed by the processor, configured to:
transmit, to a server, a message requesting a restoration of card operating information, when a payment function is executed in the electronic device and the card operating information has been deleted from the electronic device,
receive the card operating information from the server, and
store the received card operating information in the memory.

2. The electronic device of claim 1, wherein the at least one instruction executed by the processor is configured to further:
collect account information,
determine whether the collected account information is same as account information of a previous user, and
transmit, to the server, a message requesting a verification of a card issuance history, when the collected account information is the same as the account information of the previous user,
wherein the received card operating information corresponds to the card issuance history received from the server.

3. The electronic device of claim 2, wherein the at least one instruction executed by the processor is configured to:
display a user interface associated with the restoration of the card operating information.

4. The electronic device of claim 3, wherein the at least one instruction executed by the processor is configured to:
receive a user input for a card, from among a plurality of cards, for which corresponding card operation information is to be restored; and
transmit the message requesting the restoration of the card operating information corresponding to the selected card.

5. The electronic device of claim 1, wherein the at least one instruction executed by the processor is configured to:
synchronize payment required information corresponding to the received card operating information with the received card operating information, wherein the payment required information is stored in a security module.

6. The electronic device of claim 1, wherein the at least one instruction executed by the processor is configured to:
collect account information,
transmit, to the server, a message requesting a deletion of the card operating information stored in the server, when the collected account information is different from stored account information of a previous user, and
delete payment required information stored in a security module.

7. The electronic device of claim 6, wherein the at least one instruction executed by the processor is configured to:
establish a communication channel with a security server for the security server to access the security module, and
delete the payment required information stored in the security module, in response to a control of the security server.

8. The electronic device of claim 7, wherein the at least one instruction executed by the processor is configured to:
delete the stored account information of the previous user.

9. A method of processing card operating information, comprising:
receiving an event associated with an execution of a payment function in an electronic device from which the card operating information is deleted;
transmitting a message, to a server, requesting a restoration of the card operating information;
receiving the card operating information from the server; and
storing the received card operating information in a memory.

10. The method of claim 9, further comprising:
collecting account information; and
obtaining, from the server, a card issuance history, when the collected account information is same as account information of a previous user,
wherein obtaining the card issuance history comprises transmitting a message, to the server, requesting verification of the card issuance history and receiving the card issuance history from the server, and
wherein receiving the card operating information comprises receiving the card operating information corresponding to the card issuance history received from the server.

11. The method of claim 9, further comprising:
outputting a user interface associated with the restoration of the card operating information;
receiving a user input for a card, from among a plurality of cards, for which corresponding card operation information is to be restored; and
transmitting a message requesting the restoration of the card operating information corresponding to the selected card.

12. The method of claim 9, further comprising synchronizing payment required information corresponding to the received card operating information with the received card operating information, wherein the payment required information is stored in a security module.

13. The method of claim 9, further comprising:
collecting account information;
transmitting a message, to the server, requesting a deletion of the card operating information stored in the server, when the collected account information is different from account information of a previous user; and
deleting payment required information stored in a security module,
wherein deleting the payment required information comprises:
establishing a communication channel with a security server for the security server to access the security module; and
deleting the payment required information stored in the security module, in response to a control of the security server.

14. The method of claim 13, further comprising deleting the account information of the previous user, which is previously stored.
